# EUROPEAN PATENT APPLICATION

(11) **EP 2 000 712 A2**
(43) Date of publication of application: **10.12.2008**
(21) Application number: 07739662.0
(22) Date of filing: 26.03.2007
(51) Int. Cl.: F16J 15/16, F16J 15/32

(54) **SHAFT SEAL DEVICE FOR FLUID MACHINE**

(30) Priority: 27.03.2006 JP 2006085058
(71) Applicant: Sanden Corporation, Isesaki-shi, Gunma 372-8502 (JP)
(72) Inventor: IIZUKA, Jiro, Gunma 372-8502 (JP); FUKUMURO, Takashi, Gunama 372-8502 (JP); SHIMUZU, Keiichi, Gunam 372-8502 (JP); UCHIKADO, Iwao, Gunma 372-8502 (JP); HOSOI, Hideniro, Gunma 372-8502 (JP); OOWA, Yuji, Gunma 372-8502 (JP)
(74) Representative: Prüfer & Partner GbR European Patent Attorneys
(86) International application number: PCT/JP2007/056224
(87) International publication number: WO 2007/111305

(57) **Abstract**

A shaft sealing device (80) that partitions a high-pressure zone and a low-pressure zone from each other in a fluid machine has an elastic member (86) including a seal portion (88) that is brought into sliding contact with a seat face of a contact-target member that is either a rotary shaft (60) or a casing (12), and a case (82) that supports the elastic member (86). The elastic member (86) has a first elastic portion that continues to a high-pressure side boundary of the seal portion (88), which is located in the high-pressure zone side, and a second elastic portion that continues to a low-pressure side boundary of the seal portion (88), which is located in the low-pressure zone side. The case (82) restrains regions of the first and second elastic portions, the regions being located away from the seal portion (88).

## Description

### TECHNICAL FIELD

The present invention relates to a shaft sealing device for a fluid machine.

### BACKGROUND ART

A shaft sealing device for a fluid machine of this type is so installed as to surround a part of a rotary shaft and prevents working fluid from leaking from the inside (high-pressure zone) to the outside (low-pressure zone) of a casing.

More concretely, the shaft sealing device has a lip made of an elastic member. The lip extends inward of the high-pressure zone. The tip end of the lip is a free end. Sliding contact of the tip end portion of the lip with the rotary shaft seals the outside of the rotary shaft.

In the shaft sealing device with such a lip, when the lip comes under high pressure, the contact pressure between the rotary shaft and the lip is increased. This increase causes abnormal abrasion and then deterioration of the sealability. In order to prevent such an increase in contact pressure, the lip seals disclosed in Unexamined Japanese Patent Application Publication Nos. 2003-97723 and 2004-156702 are provided with means for applying lips with component force acting in an outward radial direction according to the pressure of high-pressure zones.

Other than the increase of contact pressure, an increase in contact area is also a factor in the sealability deterioration of the lip seal. A conventional lip seals has a lip with a free tip end. When applied with the pressure of a high-pressure zone, the lip is noticeably deformed into a squashed shape. Such deformation of the lip enlarges contact area and increases the amount of heat produced by sliding movement. Besides, the lip deformation causes a difficulty in supplying lubricating oil to sliding parts. On this account, the sliding movement between the lip and the rotary shaft raises the temperature of the lip, which undermines the quality and thus the sealability of the lip.

It is considered that the lip seals of the above two publications suppress the lip deformation caused by pressure to some degree by applying the lips with the component force acting in the outward radial direction according to the pressure of high-pressure zones. On the other hand, the lip seals of the above publications, in which the lips are supported by a cantilever method as viewed in a vertical section, are not capable of satisfactorily suppressing the lip deformation especially at their free ends. After all, due to the enlargement of contact area of sliding parts, the amount of heat is increased, and the lubricating oil for the sliding parts runs short. The temperature of the lips therefore becomes high enough to degrade the quality and thus the sealability of the lips.

In each of the lip seals of the above publications, two lips are in sliding contact with the rotary shaft. If the lip located on the high-pressure zone side has high sealability, it is difficult to supply the lubricating oil to a sliding part between the lip on the low-pressure zone side and the rotary shaft. In result, the lip on the low-pressure zone side becomes high in temperature. Furthermore, the heat of the lip on the low-pressure zone side is transmitted to the lip on the high-pressure zone side and raises the temperature of the lip on the high-pressure zone side. Consequently, these two lips are both degraded in quality.

In each of the lip seals of the publications, if the lip on the high-pressure zone side has low sealability, a space between the lips comes under high pressure. The lip on the low-pressure zone side is noticeably deformed into a squashed shape and becomes high in temperature. Again, the heat of the lip on the low-pressure zone side is transmitted to the lip on the high-pressure zone side and raises the temperature of the lip on the high-pressure zone side. This degrades the quality of the two lips.

As described above, if the shaft sealing device that employs a lip of a cantilevered-type as viewed in a vertical section partitions the high-pressure and low-pressure zones from each other, the lip is degraded in quality at an early stage. The shaft sealing device of this type accordingly lacks durability and reliability. Moreover, in a fluid machine employing this shaft sealing device, more power is consumed due to the enlarged contact area of the sliding part between the lip and the rotary shaft. If it is intended that the durability and reliability of the lip be secured simply by choice of material, this incurs high cost in material for the lip.

### Disclosure of the Invention

The invention has been made in light of the above-described circumstances. It is an object of the invention to provide a shaft sealing device for a fluid machine, which has durability and reliability and contributes to reduction in power consumption and material cost.

In order to achieve the object, the invention provides a shaft sealing device for a fluid machine, which has an elastic member including a seal portion that is brought into sliding contact with a seat face of a contact-target member that is either one of a rotary shaft and a casing, and support means for supporting the elastic member. The shaft sealing device for a fluid machine partitions a high-pressure zone and a low-pressure zone from each other. The elastic member includes a first elastic portion that continues to a high-pressure side boundary of the seal portion located on the high-pressure zone side and a second elastic portion that continues to a low-pressure side boundary of the seal portion located on the low-pressure zone side. The support means restrains regions of the first and second elastic portions, the regions being located away from the seal portion.

In the shaft sealing device for a fluid machine according to the invention, the first and second elastic portions continue to the boundaries of the seal portion, and the support means restrains the portions of the first and second elastic portions which are located away from the seal portion. Even if the high-pressure zone has high pressure, the first and second elastic portions regulate a deformation of the seal portion and suppress an increase in contact area between the seat face and the seal portion. This naturally suppresses an increase in amount of heat produced by sliding movement, and moreover makes it possible to smoothly supply lubricating oil to between the seat face and the seal portion. Therefore, the seal portion is prevented from having high temperature and thus being degraded in quality. Consequently, the shaft sealing device has high durability and reliability, and is inexpensive since no expensive material is required for making the elastic member. Besides, in a fluid machine employing the above shaft sealing device, power consumption is reduced.

Preferably, the elastic member has a circumferential surface that is formed in the first elastic portion and is formed into a curved face continuing into a seat face of the seal portion brought into sliding contact with the seat face and facing the high-pressure zone, and the circumferential surface is displaced in a direction away from the contact-target member due to the pressure of the high-pressure zone.

In a preferable aspect of the shaft sealing device for a fluid machine, the first elastic member is deformed away from the contact-target member according to the pressure of the high-pressure zone, which has been applied to the circumferential surface, and also produces a component force acting to press the seal portion against the seat face. In other words, the first elastic member is applied with force acting in the receding direction from the contact-target member, whereas the seal portion is applied with force acting in the pressing direction opposite to the receding direction. Since the forces working in the receding and pressing directions contiguously act upon the elastic member across the high-pressure side boundary of the seal portion in the above-described fashion, the increase of the contact area between the seat face and the seal portion is further suppressed.

Preferably, the contact-target member has an opposite face located opposite to the circumferential surface, and a gap between the circumferential surface and the opposite face as viewed in a direction orthogonal to the seal face spreads with distance from the seal face.

In a preferable aspect of the shaft sealing device for a fluid machine, a gap between the circumferential surface of the first elastic member and the opposite face of the contact-target member spreads with distance from the seal portion. The lubricating oil of the high-pressure zone easily flows into the gap, and the lubricating oil that has entered the gap is easily maintained. Through this gap, the lubricating oil is more smoothly supplied to between the seat face and the seal portion.

Preferably, the shaft sealing device for a fluid machine further has a doughnut-shaped space formed in between the high-pressure zone and the low-pressure zone and including at least one portion marked off by a back surface of the seal portion and back surfaces of the first and second elastic portions.

In a preferable aspect of the shaft sealing device for a fluid machine, the seal portion and the first and second elastic portions continue into one another so as to make off at least one portion of the doughnut-shaped space.

The first elastic portion reliably produces the component force acting to press the seal portion against the seat face according to the pressure of the high-pressure zone, which has been applied to the circumferential surface. In the shaft sealing device, therefore, the increase of the contact area between the seat face and the seal portion is surely suppressed.

Preferably, the elastic member has a shape of a tube containing the doughnut-shaped space inside.

In a preferable aspect of the shaft sealing device for a fluid machine, the tube-like shape of the elastic member makes it easy to restrain the first and second elastic members by using the support means, and therefore facilitates assembly.

Preferably, the space is airtightly partitioned from both the high-pressure and low-pressure zones, and is filled with gas.

In a preferable aspect of the shaft sealing device for a fluid machine, the assembly is easy if the space is filled with air.

Preferably, the space is airtightly partitioned from both the high-pressure and low-pressure zones, and is filled with a material in a gas-liquid mixed state.

In a preferable aspect of the shaft sealing device for a fluid machine, when the space is filled with the material in the gas-liquid mixed state, a contact pressure between the seat face and the seal portion is adjusted to a proper value. In the shaft sealing device, therefore, the increase of the contact area is suppressed, and yet a proper contact pressure is ensured, which offers sealability.

Preferably, the space is airtightly partitioned from both the high-pressure and low-pressure zones, and is filled with an incompressible fluid.

In a preferable aspect of the shaft sealing device for a fluid machine, when the deformation of the first elastic member reduces the space in volume, the pressure of the incompressible fluid is increased in response to the volume decrease, and the force acting to press the seal portion against the seat face is increased. In the shaft sealing device, therefore, the increase of the contact area is suppressed, and yet the proper contact pressure is ensured, which offers sealability.

Preferably, the space is filled with lubricating oil serving as the incompressible fluid, and the seal portion is permeable to the lubricating oil.

In a preferable shaft sealing device for a fluid machine, the lubricating oil permeates the seal portion and exudes between the seal portion and the seat face. In the shaft sealing device, therefore, the lubricating oil is reliably supplied to between the seal portion and the seat face.

Preferably, the lubricating oil is incompatible with fluid within the high-pressure zone.

In a preferable aspect of the shaft sealing device for a fluid machine, the lubricating oil is incompatible with the fluid within the high-pressure zone, so that it is prevented that the fluid is mixed into the lubricating oil, permeates the elastic member, and leaks into the low-pressure zone.

Preferably, the elastic member is made of elastomer.

In a preferable aspect of the shaft sealing device for a fluid machine, the elastic member is made of elastomer, so that the seal portion and the seat face slide against each other with no space therebetween, which offers good sealability.

Preferably, the elastic member is made of fluorine resin.

In a preferable aspect of the shaft sealing device for a fluid machine, the elastic member is made of fluorine resin, so that a lubricating property is ensured even if an amount of the lubricating oil supplied to between the seal portion and the seat face is small, and sealability is secured even if the seal portion has a temperature higher than a heatproof temperature of elastomer.

Preferably, the shaft sealing device for a fluid machine further has an urging member that is brought into contact with the back surface of the seal portion and urges the seal portion toward the seat face. An elastic coefficient of the urging member in the urging direction is equal to or more than an elastic coefficient of the elastic member. An elastic coefficient of material of the urging member is larger than an elastic coefficient of material of the elastic member.

Preferably, the shaft sealing device for a fluid machine further has an urging member that is brought into contact with a back surface of the seal portion and urges the seal portion toward the seat face. An elastic coefficient of the urging member in the urging direction is equal to or more than an elastic coefficient of the elastic member. An elastic coefficient of material of the urging member is smaller than an elastic coefficient of material of the elastic member.

In a preferable aspect of the shaft sealing device for a fluid machine, the seal portion is pressed against the seat face by the urging member, so that a good sealability is secured. If the elastic coefficient of material of the urging member is greater than the elastic coefficient of material of the elastic member, that is, if a metal spring or the like is utilized as the urging member, influences of temperature and pressure are small, and a good sealability is secured.

If the elastic coefficient of material of the urging member is smaller than the elastic coefficient of material of the elastic member, there is an improvement in tracking performance with respect to eccentricity and oscillation of the rotary shaft.

Preferably, the urging member is made of a porous body.

In a preferable aspect of the shaft sealing device for a fluid machine, the urging member is made of a porous body and is inexpensive.

Preferably, the urging member is made of silicone rubber.

In a preferable aspect of the shaft sealing device for a fluid machine, the urging member is made of silicone rubber and is excellent in heat resistance.

Preferably, the shaft sealing device for a fluid machine further has a metal layer that is integrally formed in the elastic member.

In a preferable aspect of the shaft sealing device for a fluid machine, even if the elastic member is made of elastomer that is permeable to fluid, the metal layer intercepts the permeation of the fluid and thus prevents the fluid from leaking into the low-pressure zone.

Preferably, the shaft sealing device for a fluid machine further has a spirally-extending oil groove in the seal face of the seal portion, which is brought into sliding contact with the seat face, the groove leading not to the low-pressure zone but only to the high-pressure zone.

In a preferable aspect of the shaft sealing device for a fluid machine, the lubricating oil is more smoothly supplied to between the seat face and the seal portion through the oil groove extending partway in the seal face. Through the oil groove, the lubricating oil is also returned to the high-pressure zone side. The sealability is secured in a region of the seal face, where the oil groove is not formed.

Preferably, an abrasion-proof layer or a lubrication layer is formed at least either one of the seat face and the seal face of the seal portion, which is brought into sliding contact with the seat face.

In a preferable aspect of the shaft sealing device for a fluid machine, the abrasion-proof layer or the lubrication layer made of a solid lubricating material, so that the property of sliding movement is enhanced, and the excellent sealability is maintained for the long term.

### BRIEF DESCRIPTION OF THE DRAWINGS

FIG. 1 is a vertical sectional view of a variable displacement swash plate compressor that employs a shaft sealing device of a first embodiment;
FIG. 2 is an enlarged view showing the shaft sealing device and its close surroundings;
FIG. 3 is a view for explaining force acting upon an elastic member of the shaft sealing device of FIG. 2;
FIG. 4 is a view for explaining a modification example of the shaft sealing device of FIG. 2;
FIG. 5 is a vertical sectional view of a shaft sealing device of a second embodiment;
FIG. 6 is a vertical sectional view of a shaft sealing device of a third embodiment;
FIG. 7 is a vertical sectional view of a shaft sealing device of a fourth embodiment;
FIG. 8A is a vertical sectional view of a metal ring that is used in the shaft sealing device of FIG. 7;
FIG. 8B is a perspective view of the metal ring that is used in the shaft sealing device of FIG. 7;
FIG. 9 is a vertical sectional view of a shaft sealing device of a fifth embodiment;
FIG. 10 is a vertical sectional view of a shaft sealing device of a sixth embodiment;
FIG. 11 is a vertical sectional view of a shaft sealing device of a seventh embodiment, which is installed in a compressor;
FIG. 12 is a vertical sectional view of a shaft sealing device of an eighth embodiment, which is installed in a compressor;
FIG. 13A is a vertical sectional view of an elastic member that is used in a shaft sealing device of a ninth embodiment;
FIG. 13B is a perspective view of the elastic member that is used in the shaft sealing device of the ninth embodiment;
FIG. 14 is a vertical sectional view of a shaft sealing device of a tenth embodiment, which is installed in a compressor;
FIG. 15 is a vertical sectional view of a shaft sealing device of an eleventh embodiment, which is installed in a compressor; and
FIG. 16 is a vertical sectional view of a shaft sealing device of a twelfth embodiment, which is installed in a compressor.

### BEST MODE OF CARRYING OUT THE INVENTION

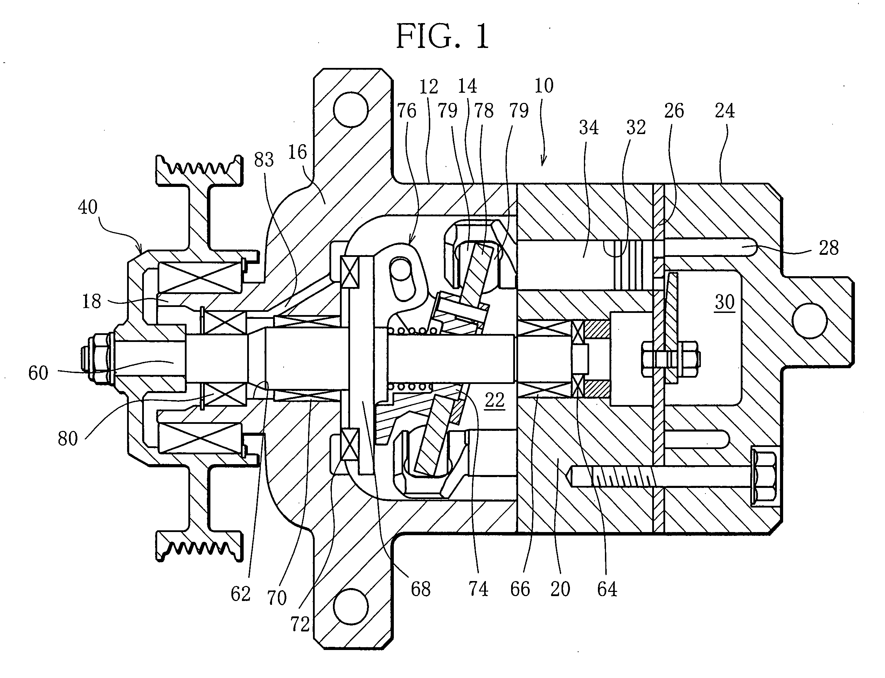

FIG. 1 shows a variable displacement swash plate compressor as a fluid machine that employs a shaft sealing device of a first embodiment.

The compressor has a casing (front housing) 12 that constitutes a part of a housing 10. The casing 12 includes a large-diameter cylindrical portion 14. The large-diameter cylindrical portion 14 has an end wall 16 to which a small-diameter cylindrical portion 18 is integrally connected. A substantially cylindrical cylinder block 20 is fixed to an open end of the large-diameter cylindrical portion 14, which is located opposite to the end wall 16. A crank chamber 22 is marked off between one end face of the cylinder block 20 and the end wall 16 of the large-diameter cylindrical portion 14.

A cylinder head 24 is fixed to the cylinder block 20 from the opposite side to the casing 12. Sandwiched between the cylinder head 24 and the cylinder block 20 is a valve plate 26.

An intake port and a discharge port, not shown, are formed in an outer circumferential wall of the cylinder head 24. An intake chamber 28 and a discharge chamber 30 are defined inside of the cylinder head 24. The intake and discharge ports open in the intake chamber 28 and discharge chamber 30, respectively. The cylinder head 24 accommodates an external-control electromagnetic valve, not shown.

The intake chamber 28 communicates with each of cylinder bores 32 of the cylinder block 20 through an intake reed valve, not shown, and also constantly communicates with the crank chamber 22 through a low-pressure communicating path, not shown.

The discharge chamber 30 communicates with each of the cylinder bores 32 through a discharge reed valve, not shown, and also communicates with the crank chamber 22 through a high-pressure communicating path, not shown. The electromagnetic valve is inserted in the high-pressure communicating path, and opens or closes the high-pressure communicating path according to a control signal transmitted from an external controller, not shown.

Pistons 34 are reciprocatably inserted into the respective cylinder bores 32 of the cylinder block 20 from the crank chamber 22 side. The pistons 34 have tails protruding into the crank chamber 22.

Motive power for reciprocating the pistons 34 is transmitted to the tails of the pistons 34.

To that end, the compressor has a pulley 40 that intermittently receives the motive power from the outside. The pulley 40 has a hub that is splined to an outer end of the rotary shaft 60.

The rotary shaft 60 extends inside and outside the casing 12 through a shaft hole 62 formed through the small-diameter cylindrical portion 18 and the end wall 16. An inner end of the rotary shaft 60 is seated in a bearing hole in the center of the cylinder block 20. The inner end of the rotary shaft 60 is rotatably supported by a thrust bearing 64 and a radial bearing 66 located in the bearing hole.

A rotor 68 is fixed to a central portion of the rotary shaft 60. The rotor 68 has a boss portion fitted to the rotary shaft 60. A radial bearing 70 is interposed between the boss portion and an inner circumferential surface of the shaft hole 62. The rotor 68 has an annular disc portion that is formed integrally with the boss portion. The disc portion is opposite to the end wall 16 with the thrust bearing 72 interposed therebetween. The central portion of the rotary shaft 60 is thus rotatably supported by the radial bearing 70 and the thrust bearing 72 through the rotor 68.

The rotary shaft 60 includes a portion extending between the rotor 68 and the cylinder block 20. This portion of the rotary shaft 60 penetrates a swash plate boss 74. The swash plate boss 74 is connected to the disc portion of the rotor 68 by a hinge 76. An annular swash plate 78 is fitted to the swash plate boss 74. The swash plate 78 is capable of tilting in relation to the rotary shaft 60 and also capable of rotating with the rotary shaft 60.

In the tail of each of the pistons 34, to which the motive power is transmitted, a recessed portion is so formed as to open toward the rotary shaft 60. Fitted in the recessed portion is a pair of semispherical shoes 79. The shoes 79 are brought into sliding contact with an outer circumferential portion of the swash plate 78 within the recessed portion. The swash plate 78 is coupled to the pistons 34 through the shoes 79.

In the above-described compressor, the rotational movement of the rotary shaft 60 is converted into the reciprocating movement of the pistons 34 through the rotor 68, the swash plate 78, etc. The stroke length of pistons 34, namely discharge capacity, is varied according to the pressure (back pressure) of the crank chamber 22. The back pressure is controlled by an external controller. The controller opens the electromagnetic valve and introduces working fluid in the discharge chamber 30 into the crank chamber 22, to thereby increase the back pressure and reduce the capacity. The controller also closes the electromagnetic valve and discharges the working fluid in the crank chamber 22 into the intake chamber 28, to thereby decrease the back pressure and increase the capacity.

In this manner, not only the working fluid leaking out from a gap between the cylinder bore 32 and the piston 34 but also the working fluid flowing through the high-pressure communicating path is introduced into the crank chamber 22. In order to prevent the working fluid within the crank chamber 22 from leaking outside the casing 12, a shaft sealing device 80 is placed in the shaft hole 62 so as to be located closer to the pulley 40 as compared to the radial bearing 70. The shaft sealing device 80 airtightly separates the crank chamber 22 from the outside, A supply path 83 for lubricating oil is obliquely formed in the end wall 16. One end of the supply path 83 opens into the shaft hole 62 between the shaft sealing device 80 and the radial bearing 70. The other end of the supply path 83 opens into the crank chamber 22 in the vicinity of the thrust bearing 72.

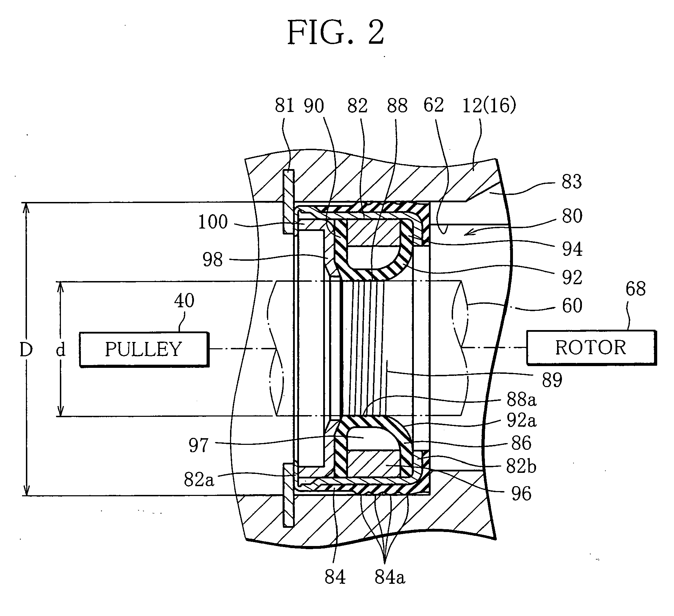

As illustrated in FIG. 2, the shaft sealing device 80 is interposed between a step surface formed in the inner circumferential surface of the shaft hole 62 and a snap ring 81. The shaft sealing device 80 has a cylindrical case 82 that is made of metal. Both ends of the case 82 are caulked in an inward radial direction and formed into inward flanges 82a and 82b. An outer end portion of the case 82 on the pulley 40 side (exterior side) is slightly expanded. The outer end portion of the case 82 has an external diameter that is a little smaller than an internal diameter D of a portion of the shaft hole 62, which surrounds the shaft sealing device 80.

An outer surface of the case 82, except for the outer end portion, is covered with a cylindrical outer packing 84 made of elastic material. The outer packing 84 is tightly attached to the case 82. The outer packing 84 has an external diameter that is substantially equal to the internal diameter D of the shaft hole 62. A plurality of annular protrusions 84a are formed in an outer circumferential surface of the outer packing 84 so as to be arranged on the rotor 68 side, namely on the crank chamber 22 side. When the outer packing 84 is in a free state, an external diameter of each of the protrusions 84a is greater than the internal diameter D of the shaft hole 62. The protrusions 84a are tightly attached to the inner circumferential surface of the shaft hole 62 in a compressed state. For this reason, airtightness between the outer circumferential surface of the outer packing 84 and the inner circumferential surface of the shaft hole 62 is secured by the protrusions 84a. Moreover, the case 82 is not relatively rotatable with respect to the casing 12.

A bobbin-shaped elastic member 86 is fitted in the case 82. When viewed in a vertical section, the elastic member 86 is in the shape of letter U. To be more concrete, the elastic member 86 has a cylindrical seal portion 88 that is located in an innermost position as viewed in a radial direction and is brought into sliding contact with an outer circumferential surface (seat face) of the rotary shaft 60. The seal portion 88 includes an inner circumferential surface (seal face) 88a in which a spirally-extending oil groove 89 is formed. The oil groove 89 extends from an end edge (high-pressure side boundary) of the seal portion 88 located on the crank chamber 22 side to just short of an end edge (low-pressure side boundary) of the seal portion 88 located on the exterior side. In short, the oil groove 89 leads only to the crank chamber 22. For convenience of explanations, the rotary shaft 60 is shown by a dashed line in FIG. 2.

A low-pressure side flange 90 continues to the low-pressure side boundary of the seal portion 88 at right angles. A curved portion 92 continues to the high-pressure side boundary of the seal portion 88. The curved portion 92 has a trumpet shape gradually flaring in a direction away from the seal portion 88 along the rotary shaft 60. The curved portion 92 has a large-diameter end edge, an external diameter of which is larger than that of the seal portion 88, on an opposite side to the seal portion 88 as viewed in an axial direction. The external diameter of the large-diameter end edge of the curved portion 92 is smaller than an external diameter of the low-pressure side flange 90. A high-pressure side flange 94 continues to the large-diameter end edge. The high-pressure side flange 94 is parallel to the low-pressure side flange 90 and is formed into an outward flange as with the low-pressure side flange 90. The high-pressure side flange 94 has an external diameter that is substantially equal to the external diameter of the low-pressure side flange 90. The low-pressure side flange 90 and the high-pressure side flange 94 have outer circumferential edges in contact with an inner circumferential surface of the case 82.

In other words, an inner circumferential surface of the elastic member 86 is formed of the seal face 88a of the seal portion 88 and a trumpet-shaped circumferential surface (curved face) 92a of the curved portion 92, which continues to one of end edges of the seal face 88a. End faces of the elastic member 86 are formed of outer surfaces of the low-pressure side and high-pressure side flanges 90 and 94.

A cylindrical metal spacer 96 is fitted into the case 82 from the inside. The spacer 96 is seated between an outer circumferential portion of the low-pressure side flange 90 and the high-pressure side flange 94. The spacer 96 has an internal diameter that is sufficiently larger than an external diameter of the seal portion 88. A doughnut-shaped space 97 is marked off between the spacer 96 and an outer circumferential surface (back surface) of the seal portion 88. The space 97 exists along an outer circumferential surface of the rotary shaft 60 through the seal portion 88.

A circular metal support disc 98 having a hole in its center is attached onto an outer surface of the low-pressure side flange 90, that is, an exterior-side end face of the elastic member 86. A rim 100 is integrally formed in an outer circumferential edge of the support disc 98. The rim 100 is protruding from the outer circumferential edge of the support disc 98 in an opposite direction to the low-pressure side flange 90. The rim 100 includes an outer circumferential surface that is fitted to the inner circumferential surface of the case 82. The central hole of the support disc 98 has an internal diameter that is slightly larger than the internal diameter of the seal portion 88.

The inward flanges 82a and 82b located at the ends of the case 82 sandwiches the high-pressure side flange 94, the spacer 96, the low-pressure side flange 90, the support disc 98 and the rim 100 in the axial direction. The outer circumferential portion of the elastic member 86, namely the outer circumferential portion of the low-pressure side flange 90 and the high-pressure side flange 94, are restrained by the case 82. The high-pressure side flange 94 is in tight contact with the spacer 96 and the inward flange 82b, and the low-pressure side flange 90 is in tight contact with the spacer 96 and the support disc 98. The space 97 is airtightly marked off by the seal portion 88, the low-pressure side flange 90, the curved portion 92 and the spacer 96.

When the elastic member 86 is in a free state, the internal diameter of the elastic member, or of the seal portion 88, is smaller than an external diameter d of a portion of the rotary shaft 60, which is surrounded by the elastic member 86. In this state, the seal portion 88 comes into sliding contact with the rotary shaft 60 with a proper tightening force (straining force).

In the above-described shaft sealing device 80, the low-pressure side flange 90 continues to one of the end edges of the seal portion 88, and the curved portion 92 and the high-pressure side flange 94 continue to the other end edge of the seal portion 88. The case 82 restrains the outer circumferential portion of the low-pressure side flange 90 and the high-pressure side flange 94 which are located away from the seal portion 88. Since the low-pressure side flange 90, the curved portion 92 and the high-pressure side flange 94 support both the end edges of the seal portion 88, even if the pressure in the crank chamber 22 (high-pressure zone) is high, it is possible to regulate the deformation of the seal portion 88 and suppress the increase of the contact area between the rotary shaft 60 and the seal portion 88. This facilitates the lubricating oil supply to between the seat face of the rotary shaft 60 and the seal face 88a of the seal portion 88, not to mention suppresses an increase in amount of heat produced by sliding movement. Therefore, the seal portion 88 is prevented from having high temperature and being degraded in quality. Consequently, the shaft sealing device 80 has high durability and reliability, and is inexpensive since no expensive material is required for making the elastic member 86. In the compressor employing the shaft sealing device 80, a frictional force is small, which accordingly lowers power consumption.

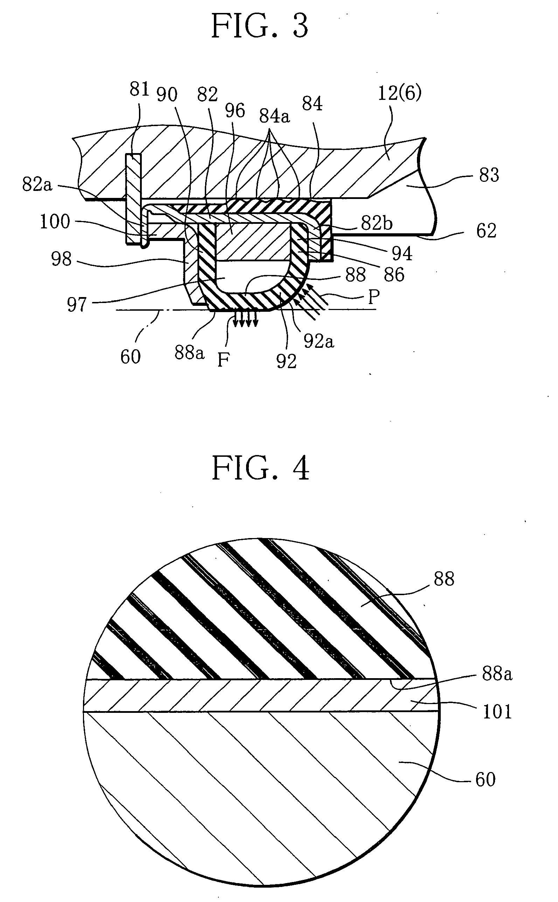

In the shaft sealing device 80, as illustrated in FIG. 3, pressure P in the crank chamber 22 acts upon a circumferential surface 92a of the curved portion 92. According to the pressure P applied to the circumferential surface 92a, the curved portion 92 is deformed away from the rotary shaft 60, and at the same time, produces a component force F acting to press the seal portion 88 against the rotary shaft 60. That is to say, the curved portion 92 and the high-pressure side flange 94 are applied with force acting in the receding direction from the rotary shaft 60, whereas the seal portion 88 is applied with the tightening force acting in the opposite direction to the receding direction. Since the forces working in the receding and tightening directions contiguously act upon the elastic member 86 across the end edge of the seal portion 88, which is on the crank chamber 22 side, the seal portion 88 is prevented from being detached away from the rotary shaft 60 due to the pressure P of the high-pressure zone. Sealability between the seal portion 88 and the rotary shaft 60 is therefore retained.

In the shaft sealing device 80, the seal portion 88, the low-pressure side flange 90 and the curved portion 92 continue to one another so as to mark off at least a part of the doughnut-shaped space 97. For this reason, the curved portion 92 reliably produces the component force F acting to press the seal portion 88 against the rotary shaft 60 according to the pressure P of the high-pressure zone, which has been applied to the circumferential face 92a. The shaft sealing device 80 thus maintains the sealability between the rotary shaft 60 and the seal portion 88.

Additionally, in the shaft sealing device 80, a gap between the circumferential surface 92a of the curved portion 92 and a portion of the rotary shaft 60, which faces the circumferential face 92, as viewed in a direction orthogonal to the seal face 88a (radial direction) spreads with distance from the seal face 88 along the rotary shaft 60. The lubricating oil within the crank chamber 22 easily flows into the gap, and the lubricating oil that has entered the gap is easily retained. Through the gap, the lubricating oil is more smoothly supplied to between the rotary shaft 60 and the seal portion 88.

The invention is not limited to the first embodiment, and may be modified in various ways. For example, the first embodiment forms the oil groove 89 in the seal face 88a of the seal portion 88. However, the oil groove 89 does not necessarily have to be formed in the seal face 88a Nevertheless, the oil groove 89 enables a smoother supply of the lubricating oil to between the rotary shaft 60 and the seal portion 88.

As illustrated in FIG. 4, surface finishing may be provided to the seal face 88a or the seat face of the rotary shaft 60, with which the seal face 88a comes into sliding contact, to form a lubrication layer 101 made of a solid lubricating material, an abrasion-proof layer or the like.

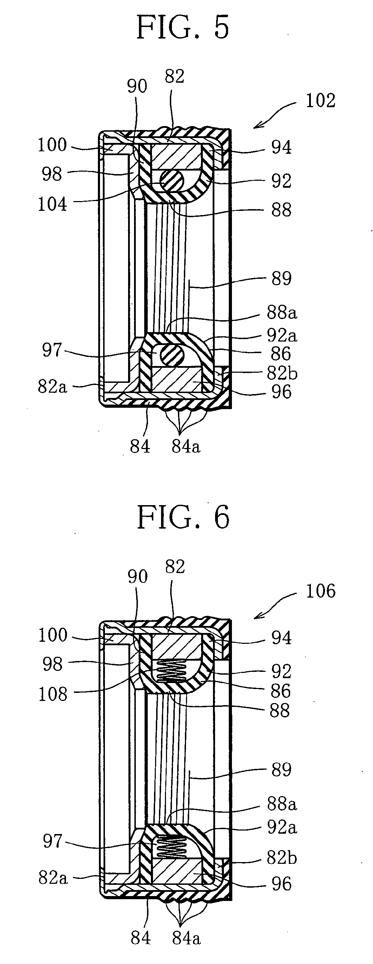

FIG. 5 shows a shaft sealing device 102 of a second embodiment. The shaft sealing device 102 has a ring 104 that is disposed in the doughnut-shaped space 97. The ring 104 is made of an elastic material and has a circular shape in vertical section. The ring 104 includes an outer circumferential edge in contact with the inner circumferential surface of the spacer 96, and an inner circumferential surface in contact with the outer circumferential surface of the seal portion 88. The ring 104 has a smaller elastic coefficient than the elastic member 86. An internal diameter of the ring 104 in a free state is smaller than the external diameter of the seal portion 88 in sliding contact with the rotary shaft 60. The ring 104 provides the seal portion 88 with an urging force acting to tighten the rotary shaft 60. This improves the sealability between the rotary shaft 60 and the seal portion 88.

Although the ring 104 is not particularly limited in terms of material, it is preferable to use a sponge-like porous polymeric material or silicone rubber. A reason is that porous polymeric materials are inexpensive, and that silicone rubber is excellent in heat resistance.

FIG. 6 shows a shaft sealing device 106 of a third embodiment. The shaft sealing device 106 has a plurality of compression coil springs 108 situated in the doughnut-shaped space 97. The compression coil springs 108 are radially arranged and equiangularly spaced. The compression coil springs 108 are in a compressed state where they are sandwiched between the outer circumferential surface of the seal portion 88 and the inner circumferential surface of the spacer 96.

As viewed in an axial direction of the compression coil springs 108, that is, the radial direction of the rotary shaft 60, an elastic coefficient of the compression coil springs 108 is equal to or greater than the elastic coefficient of the elastic member 86. The compression coil springs 108 provide the seal portion 88 with an urging force acting to tighten the rotary shaft 60. The sealability between the rotary shaft 60 and the seal portion 88 is then improved.

The compression coil springs 108 are made of metal. The material of the compression coil springs 108 has an elastic coefficient that is greater than the elastic coefficient of the elastic member 86. If metal springs or the like are used to urge the elastic member 86 as described above, the springs are hardly affected by temperature and pressure, and good sealability is secured.

If the elastic coefficient of material of a member for urging the elastic member 86 is smaller than the elastic coefficient of material of the elastic member 86, there is an improvement in tracking performance with respect to eccentricity and oscillation of the rotary shaft 60.

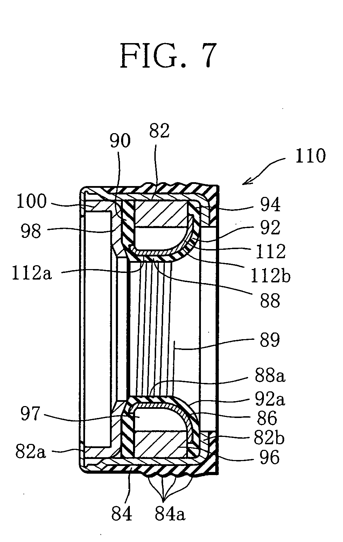

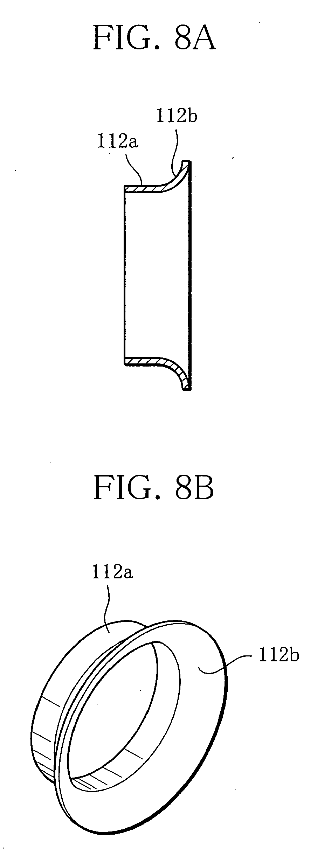

FIG. 7 shows a shaft sealing device 110 of a fourth embodiment. The shaft sealing device 110 may include a metal ring 112. Referring to FIGS. 8A and 8B in addition to FIG. 7, the metal ring 112 is made of a cylindrical ring portion 112a and a flared portion 112b that continues to one edge of the ring portion 112a. The metal ring 112 is in tight contact with the elastic member 86 along back surfaces of the seal portion 88 and the curved portion 92 and a back surface of a part of the high-pressure side flange 94. The flared portion 112b has an outer circumferential edge that is sandwiched between the spacer 96 and the inward flange 82b.

The metal ring 112 has a greater elastic coefficient than the elastic member 86. Therefore, as well as preventing the detachment of the seal portion 88 from the rotary shaft 60 without fail, the shaft sealing device 110 presses the seal portion 88 against the rotary shaft 60 with a proper contact pressure. The sealability is consequently improved in the shaft sealing device 110.

With the shaft sealing device 110, even if the elastic member 86 is permeable to working fluid within the crank chamber 22, the metal ring 112 hampers the permeation of the working fluid and then prevents the working fluid from leaking outside. If the metal ring 112 is used not to increase the contact pressure but to prevent only the leakage of the working fluid, there may be formed a metal layer thinner than the metal ring 112 in the elastic member 86.

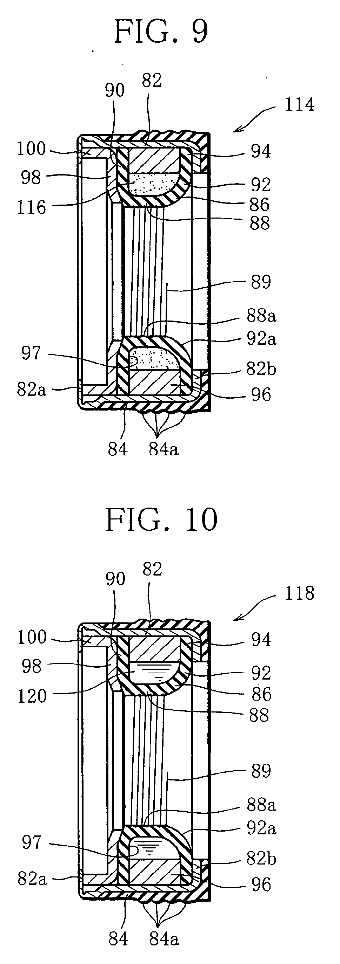

FIG. 9 shows a shaft sealing device 114 of a fifth embodiment. The space 97 of the shaft sealing device 114 may be filled with material 116 in a gas-liquid mixed state. To put it differently, according to the first to fourth embodiments, the outside of the compressor or the crank chamber 22 is airtightly separated from the space 97, and the space 97 is filled with air. However, the space 97 may be filled with the material in the gas-liquid mixed state. In this case, along with the deformation of the curved portion 92, the material 116 in the gas-liquid mixed state, which fills in the space 97, is compressed. The compressed material 116 in the gas-liquid mixed state generates pressure acting to press the seal portion 88 against the rotary shaft 60. When this pressure works with the component force F, the contact pressure between the rotary shaft 60 and the seal portion 88 is adjusted to a proper value. In the shaft sealing device 114, consequently, the increase of the contact area is suppressed, and yet the proper contact pressure is secured. The sealability is therefore maintained.

As the material 116 in the gas-liquid mixed state, it is possible to use chlorofluorocarbon, CO₂ or the like, which is used as a refrigerant of a refrigeration circuit.

The space 97 may be filled with an incompressible fluid. In this instance, when the deformation of the curved portion 92 reduces the space 97 in volume, the pressure of the incompressible fluid is increased in response to the volume decrease, leading to generation of more of the force acting to press the seal portion 88 against the rotary shaft 60. As a result of combination of the above force and the component force F, the contact area between the rotary shaft 60 and the seal portion 88 is prevented from being increased. At the same time, the proper contact pressure is retained, and the sealability is secured.

FIG. 10 shows a shaft sealing device 118 of a sixth embodiment. In the shaft sealing device 118, the space 97 is filled with lubricating oil 120. The elastic member 86 is made of elastomer, such as polyurethane, which is permeable to the lubricating oil 120. In the shaft sealing device 118, the lubricating oil within the space 97 permeates the seal portion 88 and oozes from the seal face 88a. Therefore, a good lubricating property is ensured between the seal portion 88 and the rotary shaft 60.

The lubricating oil 120 filled in the space 97 is preferably incompatible with the working fluid within the crank chamber 22. This is to prevent the working fluid from being mixed into the lubricating oil 120 and leaking outside.

Since the lubricating oil is an incompatible fluid, too, when the space 97 is reduced in volume, the pressure of the lubricating oil is raised in response to the volume decrease, leading to generation of more of the force acting to press the seal portion 88 against the rotary shaft 60. As a result of combination of the above force and the component force F, the contact area between the rotary shaft 60 and the seal portion 88 is prevented from being increased. At the same time, the proper contact pressure is retained, and the sealability is secured.

If the space 97 is not filled with the lubricating oil, the elastic member 86 is not particularly limited in material. It is preferable, however, that the elastic member 86 should be made of elastomer or fluorine resin. If the elastic member 86 is made of elastomer, almost no gap exits between the seal portion 88 and the rotary shaft 60, and a good sealability is secured. If the elastic member 86 is made of fluorine resin, the property of sliding movement and the heat resistance are improved as compared to when elastomer is used.

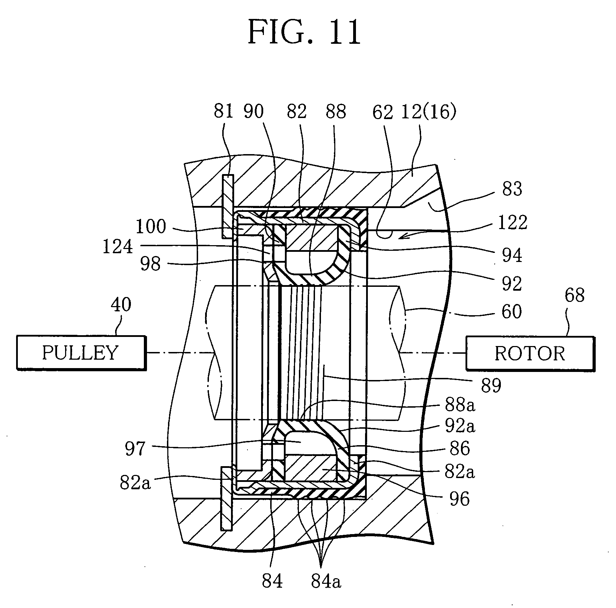

FIG. 11 shows a shaft sealing device 122 of a seventh embodiment. The shaft sealing device 122 may have the space 97 and a communicating path 124 leading to a region in a shaft hole 62, which is located on the exterior side of the shaft sealing device 122. For example, the communicating path 124 is a through hole that is formed through the low-pressure side flange 90 of the elastic member 86 and the support disc 98 as shown in FIG. 11.

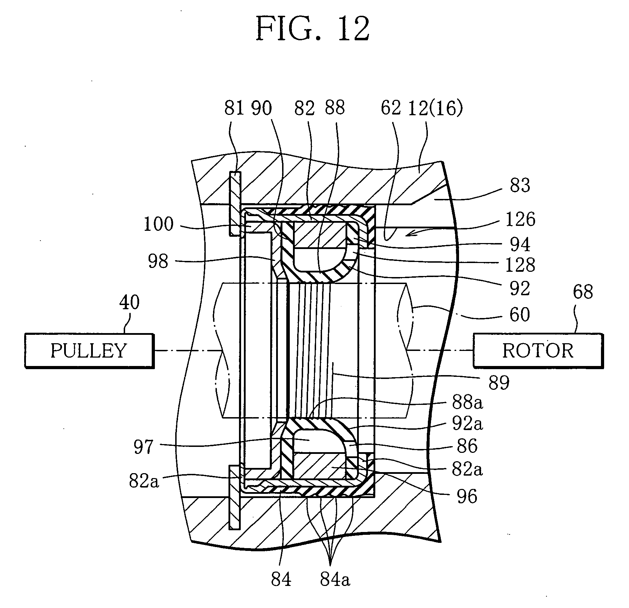

FIG. 12 shows a shaft sealing device 126 of an eighth embodiment. The shaft sealing device 126 may have the doughnut-shaped space 97 and a communicating path 128 leading to a region in the shaft hole 62, which is located on the crank chamber 22 side of the shaft sealing device 126. For example, the communicating path 128 is a through hole that is formed through the curved portion 92 of the elastic member 86 as shown in FIG. 12. In this case, as the communicating path 128, a plurality of through holes are formed equiangularly.

In the shaft sealing device 126, the pressure in the space 97 is raised up to the same value as the pressure in the crank chamber 22. The pressure of the space 97 acts in a direction of pressing the seal portion 88 against the rotary shaft 60. On the other hand, the seal portion 88 is supported by the low-pressure side flange 90, the curved portion 92 and the high-pressure side flange 92 at both axial sides thereof, and is therefore suppressed from being deformed into a squashed shape. In result, the increase of the contact area between the seal portion 88 and the rotary shaft 60 is suppressed.

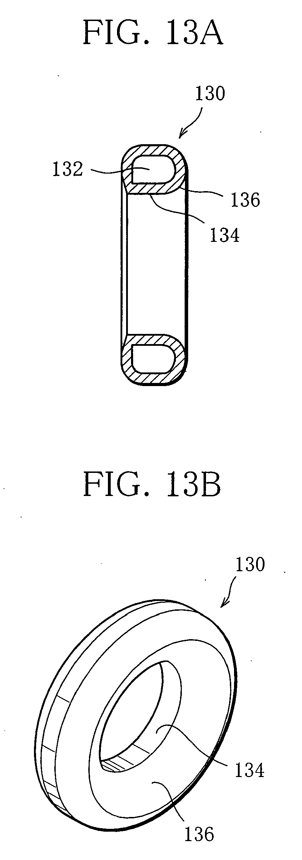

FIGS. 13A and 13B show an elastic member 130 that is employed in a shaft sealing device of a ninth embodiment. The elastic member 130 has a shape of a tube containing a doughnut-shaped space 132. The elastic member 130 has a seal portion 134 in an innermost position as viewed in a radial direction. A curved portion 136 continues to the seal portion 134. As described above, the vertical sectional shape of the elastic member is not limited to the U-like shape of the first embodiment, and may be the shape of the letter O or J or another shape.

If the elastic member 130 is used, the spacer 96 is unnecessary. An outer circumferential portion of the elastic member 130 is sandwiched between the support disc 98 and the inward flange 82a. The outer circumferential portion of the elastic member 130 is thus locked by the case 82. The ninth embodiment therefore requires the smaller number of components, as compared to the shaft sealing device 80 of the first embodiment. Accordingly, the assembly is facilitated, and the shaft sealing device is reduced in price.

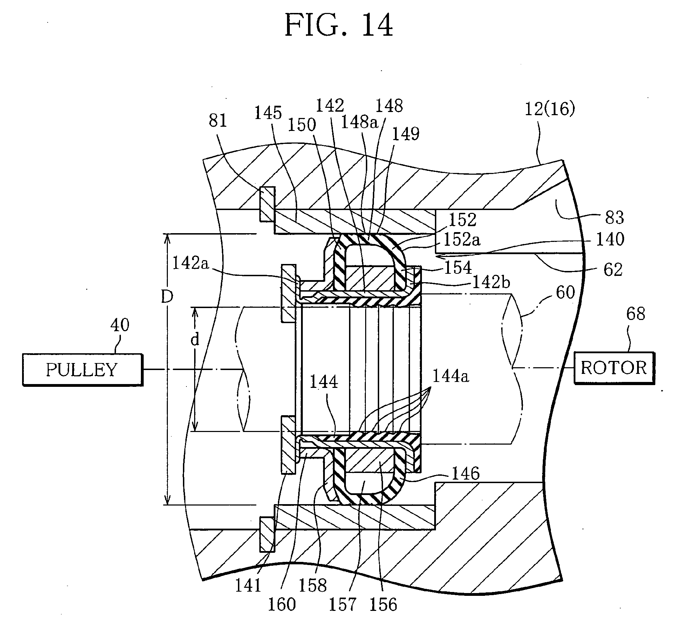

FIG. 14 shows a shaft sealing device 140 of a tenth embodiment. The shaft sealing device 140 is fixed not to the inner circumferential surface of the shaft hole 62 but to the rotary shaft 60.

More specifically, the shaft sealing device 140 is sandwiched between the step surface formed in the outer circumferential surface of the rotary shaft 60 and a snap ring 141. The shaft sealing device 140 has a cylindrical metal case 142. Both ends of the case 142 are caulked in an outward radial direction, thereby forming outward flanges 142a and 142b. In the case 142, an exterior-side outer end portion is somewhat reduced in diameter. An internal diameter of the outer end portion of the case 142 is slightly larger than an external diameter d of a portion of the rotary shaft 60, which is surrounded by the case 142.

An inner surface of the case 142, except for the above-mentioned outer end portion, is covered with a cylindrical inner packing 144 made of an elastic material. The inner packing 144 is tightly attached to the case 142. The inner packing 144 has an internal diameter that is substantially equal to the external diameter d of the rotary shaft 60. There are formed a plurality of annular ridges 144a in an inner circumferential surface of the inner packing 144 to be arranged on the rotor 68 side, or on the crank chamber 22 side. When the inner packing 144 is in a free state, an internal diameter of each of the ridges 144a is smaller than the external diameter d of the rotary shaft 60, and the ridges 144a are in tight contact with the outer circumferential surface of the rotary shaft 60 in a compressed state. Airtightness between the inner circumferential surface of the inner packing 144 and the outer circumferential surface of the rotary shaft 60 is thus secured by the ridges 144a. The case 142 is prohibited from relative rotation with respect to the rotary shaft 60.

A tire-shaped elastic member 146 is fitted to an outer side of the case 142. When viewed in a vertical section, the elastic member 146 is in the shape of letter U that opens in an inward radial direction opposite to the elastic member 86. The elastic member 146 has a cylindrical seal portion 148 in an outermost position as viewed in the radial direction. The seal portion 148 is brought into sliding contact with a cylindrical metal seat ring 145 that is provided on the casing 12 side.

To be more specific, the seat ring 145 is fitted to the inner circumferential surface of the shaft hole 62 and sandwiched between the step surface formed in the inner circumferential surface of the shaft hole 62 and a snap ring 81. The seat ring 145 is therefore prohibited from relative rotation with respect to the casing 12. The seal portion 148 of the elastic member 146 comes into sliding contact with an inner circumferential surface of the seat ring 145.

A spirally-extending oil groove 149 is formed in an outer circumferential surface (seal face) 148a of the seal portion 148. The oil groove 149 extends from an end edge (high-pressure side boundary) of the seal portion 148 located on the crank chamber 22 side to just short of an end edge (low-pressure side boundary) of the seal portion 148 located on the exterior side.

A low-pressure side flange 150 continues to the low-pressure side boundary of the seal portion 148 at right angles, whereas a curved portion 152 continues to the high-pressure side boundary of the seal portion 148. The curved portion 152 has a diameter tapering with distance from the seal portion 148 along the rotary shaft 60. The curved portion 152 includes a small-diameter end edge having a smaller diameter than the internal diameter of the seal portion 148, on the opposite side of the seal portion 148 as viewed in an axial direction. The internal diameter of the small-diameter end edge of the curved portion 152 is larger than an internal diameter of the low-pressure side flange 150. The high-pressure side flange 154 continues to the small-diameter end edge. The high-pressure side flange 154 is set parallel to the low-pressure side flange 150, and is formed into an inward flange as with the low-pressure side flange 150. The high-pressure side flange 154 has an internal diameter that is substantially equal to an internal diameter of the low-pressure side flange 150. Inner circumferential edges of the low-pressure side and high-pressure side flanges 150 and 154 are in contact with an outer circumferential surface of the case 142.

An outer circumferential surface of the elastic member 146 is formed of the seal face 148a of the seal portion 148 and the circumferential surface 152a of the curved portion 152 that continues to one of end edges of the seal face 148a. End faces of the elastic member 146 are formed of outer surfaces of the low-pressure side and high-pressure side flanges 150 and 154.

A cylindrical metal spacer 156 is fitted to the case 142 from the outside. The spacer 156 is located in between the outer circumferential portion of the low-pressure side flange 150 and the high-pressure side flange 154. The spacer 156 has an external diameter that is sufficiently smaller than the internal diameter of the seal portion 148. A doughnut-shaped space 157 is marked off between the spacer 156 and the outer circumferential surface (back surface) of the seal portion 148.

A circular metal support disc 158 having a hole in the center thereof is attached to the outer surface of the low-pressure side flange 150, that is, the exterior-side end face of the elastic member 146. A rim 160 is integrally formed in an inner circumferential edge of the support disc 158. The rim 160 is protruding from the inner circumferential edge of the support disc 158 in an opposite direction to the low-pressure side flange 150. An inner circumferential surface of the rim 160 is fitted to the outer circumferential surface of the case 142. The support disc 158 has an external diameter that is slightly smaller than the external diameter of the seal portion 148.

The outward flanges 142a and 142b located at both the ends of the case 142 sandwich the high-pressure side flange 154, the spacer 156, the low-pressure side flange 150, the support disc 158 and the rim 160 in the axial direction. An inner circumferential portion of the elastic member 146, namely that of the low-pressure side flange 150 and the high-pressure side flange 154 are restrained by the case 142. The high-pressure side flange 154 is in tight contact with the spacer 156 and the outward flange 142b, and the low-pressure side flange 150 is in tight contact with the spacer 156 and the support disc 158. The space 157 is airtightly marked off by the seal portion 148, the low-pressure side flange 150, the curved portion 152 and the spacer 156.

When the elastic member 146 is in a free state, the external diameter of the elastic member 146, or of the seal portion 148, is larger than the internal diameter of the seat ring 145 surrounding the elastic member 146. The seal portion 148 comes into sliding contact with the seat ring 145 with proper tension.

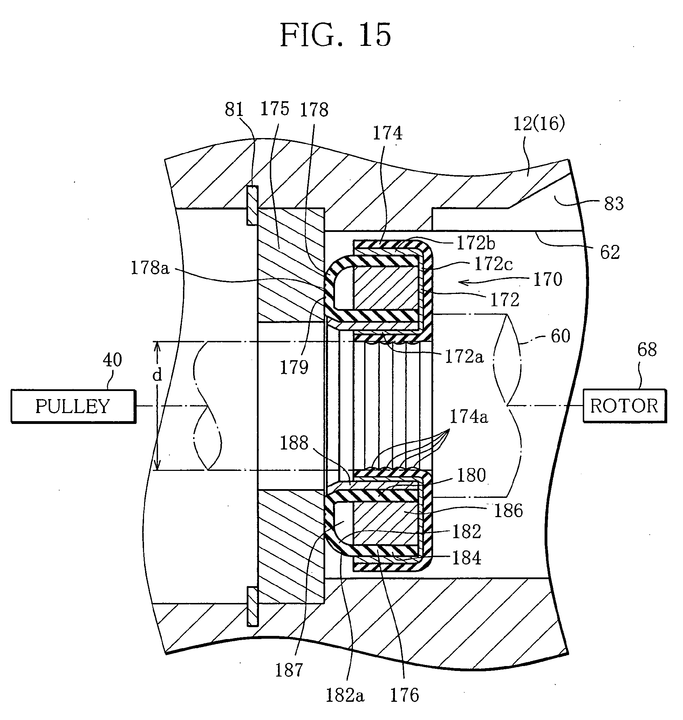

FIG. 15 shows a shaft sealing device 170 of an eleventh embodiment. The shaft sealing device 170 is fixed not to the inner circumferential surface of the shaft hole 62 but to the rotary shaft 60.

More concretely, the shaft sealing device 170 has a metal case 172. The case 172 includes an inner circumferential wall 172a, an outer circumferential wall 172b, and an end wall 172c connecting an end edge of the inner circumferential wall 172a and that of the outer circumferential wall 172b. The case 172 is in a shape of a bobbin having one open end.

The case 172 has an outer surface that is covered with a double-cylindrical outer packing 174 made of an elastic material. The outer packing 174 is in tight contact with the case 172. The outer packing 174 has an internal diameter that is substantially equal to the external diameter d of the rotary shaft 60. There are formed a plurality of annular ridges 174a in an inner circumferential surface of the outer packing 174. When the outer packing 174 is in a free state, an internal diameter of each of the ridges 174a is smaller than the external diameter d of the rotary shaft 60, and the ridges 174a are in tight contact with the outer circumferential surface of the rotary shaft 60 in a compressed state. Airtightness between the inner circumferential surface of the outer packing 174 and the outer circumferential surface of the rotary shaft 60 is thus secured by the ridges 174a. The case 172 is prohibited from relative rotation with respect to the rotary shaft 60.

A bobbin-shaped elastic member 176 that opens in an end wall 172c side of the case 172 is fitted in between the inner circumferential wall 172a and the outer circumferential wall 172b of the case 172. When viewed in a vertical section, the elastic member 176 is in the shape of letter U that opens in the crank chamber 22 side. The elastic member 176 has a circular ring plate-shaped seal portion 178 in an outermost position as viewed in the axial direction. The seal portion 178 comes into sliding contact with a circular ring plate-shaped metal seat ring 175 that is seated on the casing 12 side.

To be more specific, the seat ring 175 is fitted to the inner circumferential surface of the shaft hole 62 and sandwiched between the step surface formed in the inner circumferential surface of the shaft hole 62 and the snap ring 81. The seat ring 175 is therefore prohibited from relative rotation with respect to the casing 12. The seal portion 178 of the elastic member 176 comes into sliding contact with an end face of the seat ring 175.

A spirally-extending oil groove 179 is formed in an outer surface (seal face) 178a of the seal portion 178. The oil groove 179 extends from an outer circumferential edge of the seal portion 178 (high-pressure side boundary) located on the crank chamber 22 side to just short of an inner circumferential edge of the seal portion 178 (low-pressure side boundary) located on the exterior side.

A cylindrical low-pressure side circumferential wall 180 continues to the low-pressure side boundary of the seal portion 178 at right angles, whereas a curved portion 182 continues to the high-pressure side boundary of the seal portion 178. The curved portion 182 is gently curved away from the seat ring 175 as the curved portion 182 expands away from the seal portion 178 along the radial direction of the rotary shaft 60. The curved portion 182 includes a large-diameter end edge having a larger diameter than the outer circumferential edge of the seal portion 178 on the opposite side of the seal portion 178 as viewed in a radial direction. Axial length from the seat ring 175 to the large-diameter end edge of the curved portion 182 is shorter than axial length of the low-pressure side circumferential wall 180. A cylindrical high-pressure side circumferential wall 184 continues to the large-diameter end edge of the curved portion 182. The high-pressure side circumferential wall 184 is concentric with the low-pressure side circumferential wall 180. End edges of the high-pressure side and low-pressure side circumferential walls 184 and 180 on the end wall 172c side are substantially equal to each other in terms of axial positions. The end edges of the low-pressure side and high-pressure side circumferential walls 180 and 184 are in contact with the end wall 172c of the case 172.

An outer end surface of the elastic member 176, which is located on the seat ring 175 side, is formed of the seal face 178a of the seal portion 178 and the circumferential surface 182a of the curved portion 182 that continues to the outer circumferential edge of the seal face 178a. The inner and outer circumferential surfaces of the elastic member 176 are formed of the outer surfaces of the low-pressure side and high-pressure side circumferential walls 180 and 184.

A cylindrical metal spacer 186 is fitted into the case 172 from the seat ring 175 side. The spacer 186 is located in between a portion of the low-pressure side circumferential wall 180, which is located on the end wall 172c side, and the high-pressure side circumferential wall 184. Axial length of the spacer 186 is substantially equal to that of the high-pressure side circumferential wall 184. A doughnut-shaped space 187 is marked off between the spacer 186 and the back surface of the seal portion 178.

A cylindrical metal support pipe 188 is attached to the outer surface of the low-pressure side circumferential wall 180, that is, the inner circumferential surface of the elastic member 176. However, a gap is secured between an end edge of the support pipe 188 and the seat ring 175.

The inner and outer circumferential walls 172a and 172b of the case 172 sandwich the high-pressure side circumferential wall 184, the spacer 186, the low-pressure side circumferential wall 180 and the support pipe 188 in a radial direction. A portion of the elastic member 176, which is located on the end wall 172c side, namely a part of the low-pressure side circumferential wall 180 and the high-pressure side circumferential wall 184, are restrained by the case 172. The high-pressure side circumferential wall 184 is in tight contact with the spacer 186 and the outer circumferential wall 172b, and the low-pressure side circumferential wall 180 is in tight contact with the spacer 186 and the support pipe 188. The space 187 is airtightly marked off by the seal portion 178, the low-pressure side circumferential wall 180, the curved portion 182 and the spacer 186.

When the elastic member 176 is in a free state, axial length of the elastic member 176 is longer than distance between the end wall 172b of the case and the seat ring 175. The seal portion 178 is brought into sliding contact with the seat ring 175 with proper pressure.

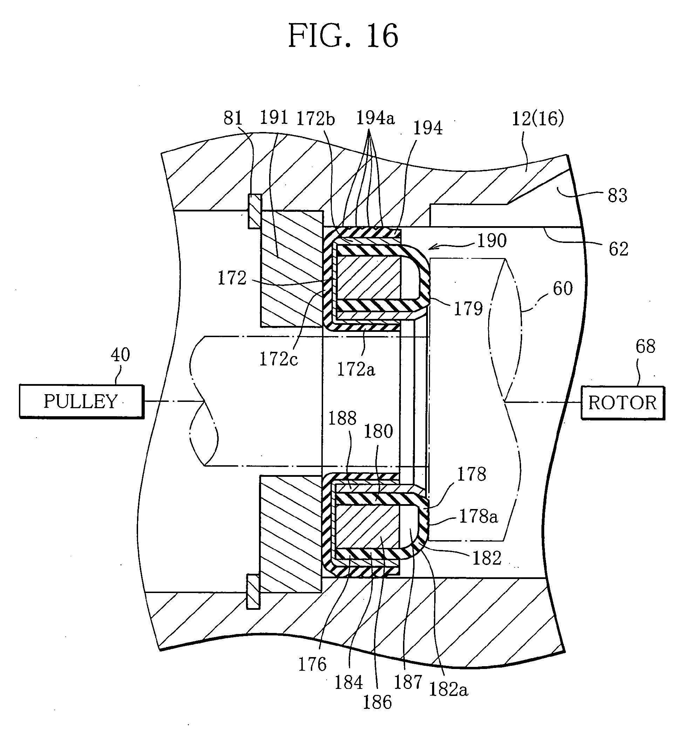

FIG. 16 shows a shaft sealing device 190 of a twelfth embodiment. The shaft sealing device 190 is different from the shaft sealing device 170 in that the shaft sealing device 190 is fixed onto the casing 12 side, but is substantially the same as the shaft sealing device 170 in a part of configuration. Therefore, the same elements are provided with identical reference marks, and descriptions thereof will be omitted.

The shaft sealing device 190 is sandwiched between the step surface of the rotary shaft 60 and a support ring 191. The support ring 191 is sandwiched between the step surface of the shaft hole 62 and the snap ring 81. An open end of the case 172 faces towards the step surface of the rotary shaft 60. The seal portion 178 comes into sliding contact with the step surface of the rotary shaft 60. An outer packing 194 in tight contact with the outer surface of the case 172 has ridges 194a in an outer circumferential surface thereof. Airtightness between the outer packing 194 and the inner circumferential surface of the shaft hole 62 is secured by the ridges 194a. There is secured a given gap in between an inner circumferential surface of the outer packing 194 and the rotary shaft 60.

As in the first embodiment, the tenth to twelfth embodiments regulate the deformation of the seal portions 148 and 178, and suppress the increase of the contact area between the seal portions 148 and 178 and the seat rings 145 and 175, or the rotary shaft 60, which serve as contact-target members. This facilitates the lubricating oil supply to between the seal portions 148 and 178 and the contact-target members, not to mention suppresses an increase in amount of heat produced by sliding movement. Therefore, the seal portions 148 and 178 are prevented from having high temperature and being degraded in quality. Consequently, the shaft sealing devices 140, 170 and 190 have high durability and reliability, and are inexpensive since no expensive material is required for making these shaft sealing devices. With fluid machines employing the shaft sealing devices 140, 170 and 190, power consumption is reduced.

In the tenth to twelfth embodiments, too, the pressure P of the crank chamber 22 acts upon the circumferential surfaces 152a and 182a of the curved portions 152 and 182. However, forces working in receding and pressing directions contiguously act upon the elastic members 146 and 176 across the high-pressure side boundary of the seal portions 148 and 178 on the crank chamber 22 side. For this reason, the seal portions 148 and 178 are not detached from the contact-target members due to the pressure P of the high-pressure zone. Sealability is maintained in between the seal portions 148 and 178 and the contact-target members.

Needless to say, the tenth to twelfth embodiments also may adopt the deformations that are applied to the first embodiment as seen in the second to ninth embodiments and the like.

Needless to say, the shaft sealing device of the invention can be applied not only to a compressor but to various kinds of fluid machines including pumps, expansion machines, etc.

## Claims

1. A shaft sealing device for a fluid machine adapted to partition a high-pressure zone and a low-pressure zone from each other, comprising:
an elastic member including a seal portion that is brought into sliding contact with a seat face of a contact-target member that is either one of a rotary shaft and a casing; and
support means for supporting the elastic member, wherein
the elastic member includes
a first elastic portion that continues to a high-pressure side boundary of the seal portion located on the high-pressure zone side and
a second elastic portion that continues to a low-pressure side boundary of the seal portion located on the low-pressure zone side, and wherein
the support means restrains regions of the first and second elastic portions, the regions being located away from the seal portion.

2. The shaft sealing device for a fluid machine according to claim 1, wherein
the elastic member has a circumferential surface that is formed in the first elastic portion and is formed into a curved face continuing into a seal face of the seal portion brought into sliding contact with the seat face and facing the high-pressure zone, and wherein
the circumferential surface is displaced in a direction away from the contact-target member due to the pressure of the high-pressure zone.

3. The shaft sealing device for a fluid machine according to claim 2, wherein
the contact-target member has an opposite face located opposite to the circumferential surface, and wherein
a gap between the circumferential surface and the opposite face as viewed in a direction orthogonal to the seal face spreads with distance from the seal face.

4. The shaft sealing device for a fluid machine according to claim 3, further comprising:
a doughnut-shaped space formed in between the high-pressure zone and the low-pressure zone and including at least one portion marked off by a back surface of the seal portion and back surfaces of the first and second elastic portions.

5. The shaft sealing device for a fluid machine according to claim 4, wherein
the elastic member has a shape of a tube containing the doughnut-shaped space inside.

6. The shaft sealing device for a fluid machine according to claim 4, wherein
the space is airtightly partitioned from both the high-pressure and low-pressure zones, and is filled with gas.

7. The shaft sealing device for a fluid machine according to claim 4, wherein
the space is airtightly partitioned from both the high-pressure and low-pressure zones, and is filled with a material in a gas-liquid mixed state.

8. The shaft sealing device for a fluid machine according to claim 4, wherein:
the space is airtightly partitioned from both the high-pressure and low-pressure zones, and is filled with an incompressible fluid.

9. The shaft sealing device for a fluid machine according to claim 8, wherein
the space is filled with lubricating oil serving as the incompressible fluid, and wherein
the seal portion is permeable to the lubricating oil.

10. The shaft sealing device for a fluid machine according to claim 9, wherein:
the lubricating oil is incompatible with fluid within the high-pressure zone.

11. The shaft sealing device for a fluid machine according to any one of claims 1 to 10, wherein
the elastic member is made of elastomer.

12. The shaft sealing device for a fluid machine according to any one of claims 1 to 10, wherein
the elastic member is made of fluorine resin.

13. The shaft sealing device for a fluid machine according to any one of claims 1 to 10, further comprising:
an urging member that is brought into contact with the back surface of the seal portion and urges the seal portion toward the seat face, wherein
an elastic coefficient of the urging member in the urging direction is equal to or more than an elastic coefficient of the elastic member, and wherein
an elastic coefficient of material of the urging member is larger than an elastic coefficient of material of the elastic member.

14. The shaft sealing device for a fluid machine according to any one of claims 1 to 10, further comprising:
an urging member that is brought into contact with a back surface of the seal portion and urges the seal portion toward the seat face, wherein
an elastic coefficient of the urging member in the urging direction is equal to or more than an elastic coefficient of the elastic member, and wherein
an elastic coefficient of material of the urging member is smaller than an elastic coefficient of material of the elastic member.

15. The shaft sealing device for a fluid machine according to claim 14, wherein
the urging member is made of a porous body.

16. The shaft sealing device for a fluid machine according to claim 14, wherein
the urging member is made of silicone rubber.

17. The shaft sealing device for a fluid machine according to claim 11, further comprising:
a metal layer that is integrally formed in the elastic member.

18. The shaft sealing device for a fluid machine according to any one of claims 1 to 10, further comprising:
a spirally-extending oil groove in the seal face of the seal portion, which is brought into sliding contact with the seat face, the groove leading not to the low-pressure zone but only to the high-pressure zone.

19. The shaft sealing device for a fluid machine according to any one of claims 1 to 10, wherein
an abrasion-proof layer or a lubrication layer is formed at least either one of the seat face and the seal face of the seal portion, which is brought into sliding contact with the seat face.
